# EUROPEAN PATENT APPLICATION

(11) **EP 1 533 682 A1**
(43) Date of publication of application: **25.05.2005**
(21) Application number: 03026749.6
(22) Date of filing: 21.11.2003
(51) Int. Cl.: G06F 1/26

(54) **System and method for powering a peripheral device**

(71) Applicant: Research In Motion Limited, Waterloo, Ontario N2L 3W8 (CA)
(72) Inventor: Mak-Fan, David, Kitchener Ontario N2G 1K2 (CA); Dawar, Annupum, Guelph Ontario N1H 2P8 (CA)
(74) Representative: Jones Day

(57) **Abstract**

A system for charging or powering a peripheral device is described. The system includes a connector for connecting the device to the computer, and a software module in the peripheral device that enables the peripheral device to be charged or powered by a computer. The software module includes a first signal module for sending a first signal to the computer that identifies the peripheral device as a hub, and a second signal module for sending a second signal to the computer that indicates that one peripheral device is connected to the hub. A power-charge receptor in the peripheral device contains hardware for powering or charging the peripheral device from the computer.

## Description

### Field of the invention

This invention relates to peripheral devices that can be connected to a computer, and more specifically to powering and/or charging such peripheral devices.

### Background of the invention

Widespread peripheral devices that can be connected to a computer, such as personal data assistants, cell phones and printers, are either powered by the computer to which they are connected, or are self-powered by their own power supply. Some peripheral devices can be powered in both manners.

In addition to connecting to a computer for *powering,* a peripheral device having its own battery pack may be connected to a computer for *charging.*

For example, a PDA can be connected to a computer to draw power therefrom. Additionally, the PDA can have its own battery pack as a power supply. If the battery pack needs charging, the PDA can be connected to the computer for this purpose.

A convenient method to power or charge a PDA in a mobile setting involves the use of a laptop computer. If the PDA is running low on batteries in the field, the PDA can be connected to a battery-operated laptop computer for charging and/or powering. If one power outlet is available, the computer can be plugged into the one outlet and the PDA can be connected to the computer to charge and/or power the PDA.

To make such a connection between a computer and a peripheral device, it is necessary to have installed in both the computer and the peripheral device appropriate software, known as a device driver, to establish and control the connection.

Device drivers can be categorized according to the communication standard to which they adhere. One category of device drivers adheres to the standard known as universal serial bus, better known by its acronym USB. Device drivers that are USB compliant are convenient because many PC's come with two USB ports. Special USB devices, called USB hubs, have additional ports that allows multiple peripheral devices to be daisy chained, which is possible because USB permits many peripheral device connections at one time.

Another convenient USB feature is that it distributes electrical power to many peripherals. USB lets the PC automatically sense the power that is required and deliver it to the device. USB "hot-swapping" obviates the need to shut down and restart the PC to attach or remove a peripheral device: the PC automatically detects the peripheral and configures the necessary software. This feature is especially useful for users of multi-player games, as well laptop PC users who want to share peripheral devices.

As convenient as USB is, one major drawback has been mentioned above, namely for a USB connection to be made between a PC and a peripheral device, it is necessary that a USB device driver be installed in the PC. This necessity is inconvenient for a number of reasons. First, time and expenses are required to write the device driver in the first place. Next, the driver has to typically be certified by undergoing several tests. Finally, the specific driver required may not be that widespread, so an attempt to connect to a foreign PC may fail if the PC does not have the driver.

As an example, a user of a USB handheld device cannot charge the device from a Windows™ based PC unless the proper Windows USB drivers have been installed. This limits the ability of the user to power and/or charge a device with a dead or low battery in the field on a PC that does not have the requisite handheld device driver installed. Moreover, as mentioned above, even for such relatively simple operations as charging or powering, the manufacturer of the peripheral device is required to develop and certify a USB driver, which is an involved and costly process.

### Summary of the invention

The present invention addresses the aforementioned problem of requiring a *specific* driver on a computer to charge or power a peripheral device by leveraging the ubiquitous availability of USB hub drivers on Windows™-based PC's.

In particular, the invention exploits the fact that pre-packaged, generic USB hub drivers are shipped with every version of the Windows™ operating system (after and including Win98™). Even though the peripheral device is not a hub, the device can present itself as such to avail itself of these drivers. For example, the peripheral device can present itself as a simple USB hub, such as a zero-port hub, or possibly a one-port hub, depending on what certification requires as the definition of a hub. These hubs can then utilize the existing, pre-packaged drivers. In this manner, the peripheral device can draw power from any Windows™-based PC, without the need of using specially written and certified drivers.

Example applications include recharging of batteries, or even fully-powering a device. Any electronic device can be powered in this way. Furthermore, the present invention can eliminate the need to supply an AC adapter with equipment that can be powered according to the principles of the invention, reducing the overall cost of the device.

Described herein is system and method for charging or powering a peripheral device. The system includes a connector for connecting the device to the computer, and a software module in the peripheral device that enables the peripheral device to be charged or powered by a computer.

The software module includes a first signal module for sending a first signal to the computer that identifies the peripheral device as a hub, regardless of its true identity. A second signal module sends a second signal to the computer that indicates that one more peripheral device is connected to the peripheral device identified as a hub than is actually connected to this device. Thus, in the simplest case where only one peripheral device is connected to the computer for powering, the second signal module indicates to the computer that one peripheral device is connected to the hub; in reality, the peripheral device is neither a hub nor a device that is connected to another peripheral device. However, by representing itself as such to the computer, the peripheral device can a) avail itself of the services of the hub driver in the computer, and b) draw appropriate power and/or charge from the computer.

The system further includes a power-charge receptor, which includes the necessary hardware, such as resistors, capacitors, etc., for powering or charging the peripheral device identified as a hub from the computer.

### Brief description of the drawings

For a better understanding of the present invention and to show more clearly how it may be carried into effect, reference will now be made, by way of example, to the accompanying drawings, in which:
Figure 1 shows a system for powering and/or charging a peripheral device, in accordance with the principles of the present invention;
Figure 2 shows another system for powering and/or charging two linked peripheral devices, in accordance with the principles of the present invention; and
Figure 3 shows a flowchart for powering and/or charging a peripheral device, in accordance with the principles of the present invention.

### Detailed description of the invention

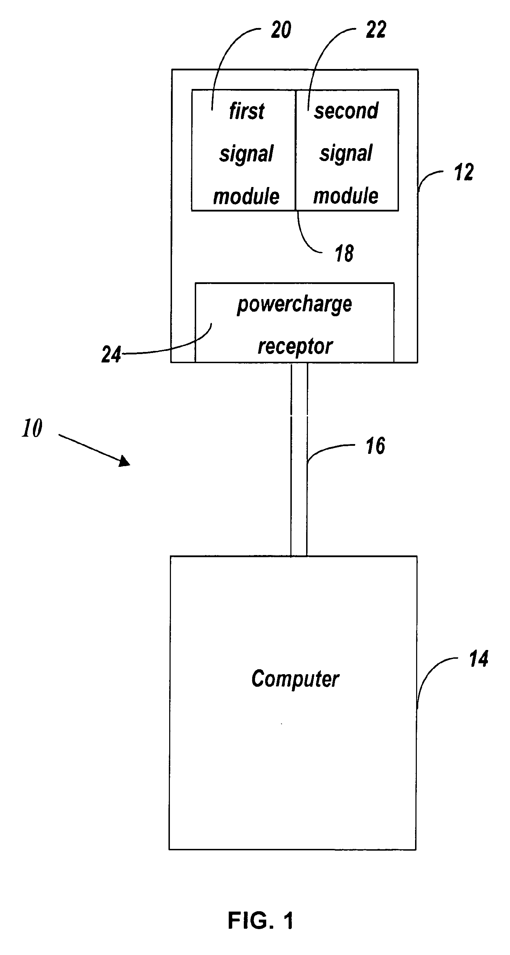

Figure 1 shows a system 10 for charging or powering a peripheral device 12 by connecting the peripheral device 12 to a computer 14. For example, the peripheral device 12 can include a personal digital assistant (PDA), a telephone, a digital camera, a modem, a keyboard, a mouse, a joystick, a CD-ROM drive, a tape drive, a floppy drive, a digital scanner, a printer, a data glove or a digitizer.

The system 10 includes a connector 16, and a software module 18 residing in the peripheral device 12. The software module 18 includes a first signal module 20 and a second signal module 22. The system 10 further includes a power-charge receptor 24 disposed in the peripheral device 12.

The software module 18 includes software and/or hardware that enables the peripheral device 12 to be charged or powered by the computer 14. As discussed in more detail below, the software module 18 includes the first signal module 20 for sending a first signal to the computer 14 that identifies the peripheral device 12 as a hub. The software module 18 also includes the second signal module for sending a second signal to the computer 14 that indicates that a peripheral device is connected to the hub. The signals can be sent via the connector 16, which connects the peripheral device 12 to the computer 14.

The power-charge receptor 24 in the peripheral device 12 is the electrical hardware that is needed to power or charge the peripheral device 12 from the computer 14 in response to the first and second signals. The power-charge device 24 can include circuit elements, such as resistors and capacitors, to power or charge the peripheral device 12.

In a preferred embodiment, the peripheral device is USB compliant and is powered and/or charged with the computer 14, such as a personal computer (PC). The PC may be running the Windows™ operating system, which typically includes a pre-packaged, generic USB hub driver. For example, Windows 98/98SE™ mostly supports USB, and Windows 2K/XP/2003™ fully supports USB support.

As used herein, a hub is a device that principally serves to connect several devices together, and to optionally provide power to them. For example, a hub may be used to connect several computers and several peripheral devices together. A bus-powered hub derives power from the bus of the computer(s) to which it is connected and, in turn, provides power to other devices to which it is connected. Other hubs are self-powered.

The present invention exploits the fact that many personal computers have pre-packaged USB hub drivers as part of their operating systems. For example, current versions of the Windows™ operating system come pre-packaged with a USB hub driver. By representing itself as a hub, instead of representing itself as a PDA, for instance, the hub driver can serve to provide charge or power to the peripheral device 12.

By installing the software module 18 in the peripheral device, there is no need for the computer 14 to have a driver that is specific to the peripheral device. Instead, assuming the computer 14 has a hub driver, the peripheral device 12 can simulate a hub by first identifying itself to the PC computer 14 as a hub and subsequently drawing power from the computer 14.

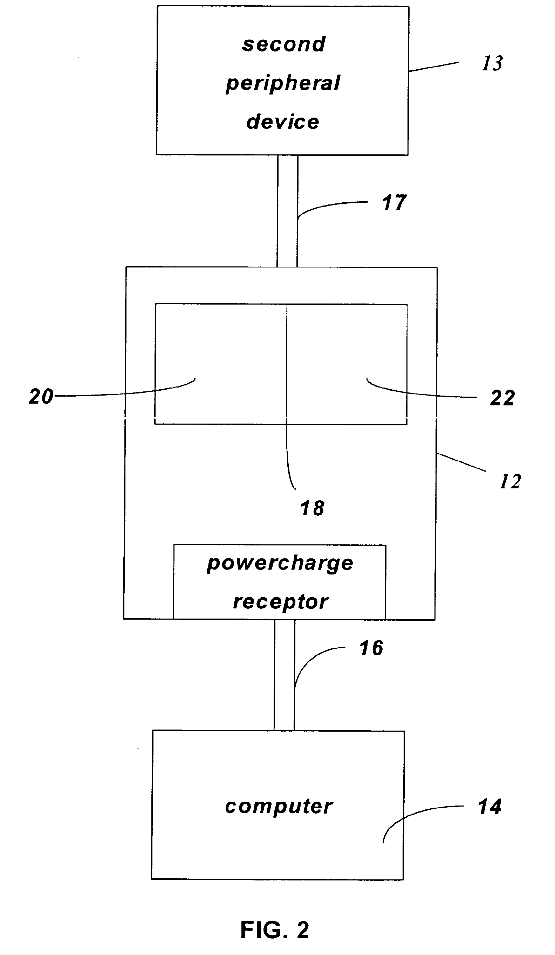

Figure 2 shows a second embodiment of the present invention in which two daisy-linked peripheral devices 12 and 13, such as a PDA connected to a printer, respectively, can draw power and/or be charged by a computer 14. The first connector 16 connects the peripheral device 12 to the computer 14, while the second connector 17 connects the two peripheral devices to each other.

The software module 18 in the peripheral device 12 enables the peripheral devices 12 and 13 to be charged or powered by the computer 14. The software module includes a first signal module 20 for sending a first signal to the computer 14 that identifies the peripheral device 12 as a hub. The second signal module 22 sends a second signal to the computer 14 that indicates that one more peripheral device is connected to the peripheral device identified as a hub than is actually connected to the peripheral device identified as a hub. In this case, the second signal module indicates to the computer that two peripheral devices are connected to the hub. In fact, only one peripheral device, namely peripheral device 13 (e.g., a printer), is connected to peripheral device 12. The computer 14 correspondingly sends enough power (or charge) to supply two peripheral devices. Some of this power is used by the peripheral device 12 identified as a hub, and some of the power is used by the other peripheral device 13. It should be understood that one, two or more peripheral devices can be linked to a computer and can draw power therefrom in an analogous manner.

In an embodiment where only one peripheral device is connected to the computer 14, the peripheral device 12 is connected to the computer 14 with the connector 16, which can include a cable having a USB compliant plug and port combination. In operation, the first signal module 20 of the software module 20 sends a first signal to the computer 14 via the connector 16 identifying the peripheral device 12 as a hub. Next, the second signal module 22 sends a signal to the computer 14 indicating that one peripherai device is connected to the hub, which is one more than is actually connected to the peripheral device 12. Typically, the first signal is sent to the computer 14 in response to an electronic query by the computer 14 that asks the peripheral device 12 to identify itself. Likewise, the second signal is sent to the computer 14 in response to a query by the computer 14 that asks how many peripheral devices are connected to the hub. Answering that one more peripheral device is connected to the peripheral device identified as the hub (i.e., the peripheral device 12 connected to the computer 14) than is actually connected to this peripheral device ensures that the computer 14 supplies the appropriate amount of power to the peripheral device 12. The first and second signals and the hub driver are all preferably USB compliant, with the hub driver suitable for a Windows™ setting.

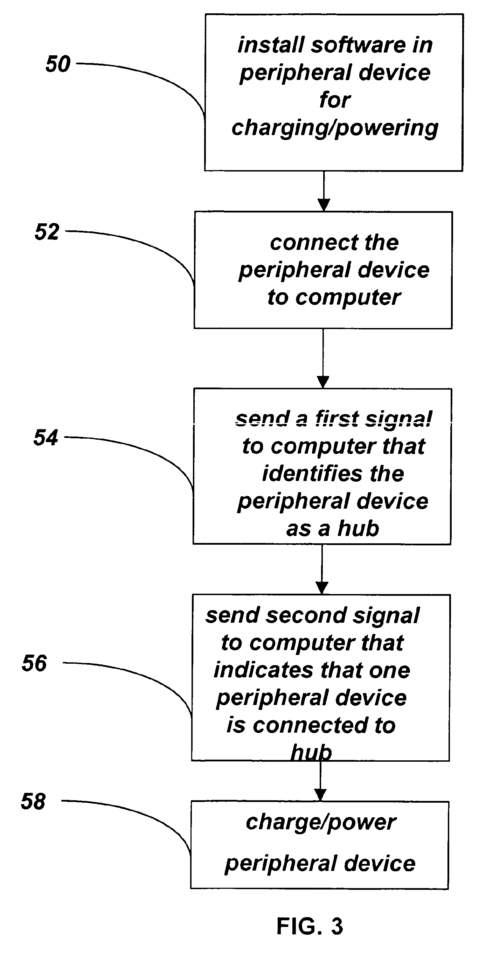

Figure 3 shows a flowchart for charging or powering a peripheral device, according to the principles of the present invention. In step 50, software is installed in the peripheral device 12 that enables the peripheral device 12 to be charged or powered by a computer 14. In particular, the software module 18, containing the first and second signal modules 20 and 22, is installed in the peripheral device 12 for this purpose.

In step 52, the peripheral device 12 is connected to the computer 14 with a cable having a USB compliant plug and port combination. In step 54, in response to a query from the computer 14, the first signal module 20 sends a first signal to the computer that identifies the peripheral device 12 as a hub despite the fact that in typical cases envisioned, the peripheral device is not a hub. It should be understood that this statement does not preclude the peripheral device from providing hub-like functionality as a secondary role. For example, the peripheral device 12 can be a PDA, a device whose principal function is not that of a hub's. Nevertheless, a PDA connected to and drawing power from a computer 14 can be connected to another device, for example a printer, which also draws power from the computer 14 via the PDA, as shown in Figure 2.

In step 56, the second signal module 22 sends a second signal to the computer 14 that indicates that one more peripheral device is connected to the peripheral device identified as a hub than is actually connected to this peripheral device. In the simplest embodiment, the peripheral device 12 is connected to the computer 14, but not to any peripheral devices. In this embodiment, the computer 14, acting as though it is connected to a hub with a peripheral device connected thereto, sends power and/or charge in step 58 to the peripheral device 12 appropriate for one device.

In step 58, the computer 14 powers and/or charges the peripheral device 12 in response to the two signals sent by the software module 18 to the computer 14.

It should be understood that various modifications could be made to the embodiments described and illustrated herein, without departing from the present invention, the scope of which is defined in the appended claims. For example, although emphasis has been placed on PDA's, other peripheral devices can benefit from the principles of the present invention.

## Claims

1. A method for at least one of charging and powering a non-hub peripheral device, the method comprising
installing software in the peripheral device that enables the peripheral device to be at least one of charged and powered by a computer;
connecting the peripheral device to the computer;
using the software to send a first signal to the computer that identifies the peripheral device as a hub;
and
the peripheral device receiving the at least one of power and charge from the computer.

2. The method of claim 1, further comprising, after the step of connecting, using the software to send a second signal to the computer that indicates that a different peripheral device is connected to the hub, wherein the peripheral device identified as a hub receives the at least one of power and charge from the computer in response to the first and second signals.

3. The method according to one of the claims 1 to 2, wherein the peripheral device is one of a personal digital assistant (PDA), a telephone, a digital camera, a modem, a keyboard, a mouse, a joystick, a CD-ROM drive, a tape drive, a floppy drive, a digital scanner, a printer, a data glove and a digitizer.

4. The method according to one of the claims 1 to 3, wherein the step of connecting includes attaching a cable having a universal serial bus (USB) compliant plug and port combination from the peripheral device to the computer.

5. The method according to one of the claims 1 to 4, wherein the computer includes a hub driver that complies with the USB standard.

6. The method of claim 5, wherein the hub driver is a Windows™ based hub driver.

7. The method according to one of the claims 1 to 6, wherein the step of using the software to send a first signal includes identifying the peripheral device to the computer as a zero-port hub.

8. The method according to one of the claims 1 to 6, wherein the step of using the software to send a first signal includes identifying the peripheral device to the computer as a one-port hub.

9. The method according to one of the claims 2 to 8, wherein the first and second signals are compliant with a universal serial bus (USB) standard.

10. A method for at least one of charging and powering a peripheral device, the method comprising
installing software in the peripheral device that enables the peripheral device to be at least one of charged and powered by a computer;
connecting the peripheral device to the computer;
using the software to send a first signal to the computer that identifies the peripheral device as a hub;
using the software to send a second signal to the computer that indicates that one more peripheral device is connected to the peripheral device identified as a hub than is actually connected to the peripheral device identified as a hub; and
the peripheral device identified as a hub receiving the at least one of power and charge from the computer.

11. The method of claim 10, wherein the peripheral device identified as a hub is one of a personal digital assistant (PDA), a telephone, a digital camera, a modem, a keyboard, a mouse, a joystick, a CD-ROM drive, a tape drive, a floppy drive, a digital scanner, a printer, a data glove and a digitizer.

12. The method according to one of the claims 10 to 11, wherein the step of connecting includes attaching a cable having a universal serial bus (USB) compliant plug and port combination from the peripheral device to the computer.

13. The method according to one of the claims 10 to 12, wherein the computer includes a hub driver that complies with the USB standard.

14. The method of claim 13, wherein the hub driver is a Windows^{TM} based hub driver.

15. The method according to one of the claims 10 to 14, wherein the step of using the software to send a first signal includes identifying the peripheral device to the computer as a zero-port hub.

16. The method according to one of the claims 10 to 14, wherein the step of using the software to send a first signal includes identifying the peripheral device to the computer as a one-port hub.

17. The method according to one of the claims 10 to 16, wherein the first and second signals are compliant with a universal serial bus (USB) standard.

18. A system for at least one of charging and powering a non-hub peripheral device, the system comprising
a connector for connecting the device to the computer;
a software module in the peripheral device that enables the peripheral device to be at least one of charged and powered by a computer, the software module including a first signal module for sending a first signal to the computer that identifies the peripheral device as a hub; and
a power-charge receptor in the peripheral device for the at least one of powering or charging the peripheral device from the computer.

19. The system of claim 18, wherein the software module further includes a second signal module for sending a second signal to the computer that indicates that a different peripheral device is connected to the hub.

20. The system according to one of the claims 18 to 19, wherein the peripheral device is one of a personal digital assistant (PDA), a telephone, a digital camera, a modem, a keyboard, a mouse, a joystick, a CD-ROM drive, a tape drive, a floppy drive, a digital scanner, a printer, a data glove and a digitizer.

21. The system according to one of the claims 18 to 20, wherein the connector includes a cable having a universal serial bus (USB) compliant plug and port combination.

22. The system according to one of the claims 18 to 21, wherein the computer includes a hub driver that complies with the USB standard.

23. The system of claim 22, wherein the hub driver is a Windows™ based hub driver.

24. The system according to one of the claims 18 to 23, wherein the first signal module identifies the peripheral device to the computer as a zero-port hub.

25. The system according to one of the claims 18 to 23, wherein the first signal modules identifies the peripheral device to the computer as a one-port hub.

26. The system according to one of the claims 19 to 25, wherein the first and second signals are compliant with a universal serial bus (USB) standard.

27. A system for at least one of charging and powering a peripheral device, the system comprising
a connector for connecting the device to the computer;
a software module in the peripheral device that enables the peripheral device to be at least one of charged and powered by a computer, the software module including
a first signal module for sending a first signal to the computer that identifies the peripheral device as a hub;
a second signal module for sending a second signal to the computer that indicates that one more peripheral device is connected to the peripheral device identified as a hub than is actually connected to the peripheral device identified as a hub; and
a power-charge receptor for the at least one of powering and charging the peripheral device identified as a hub from the computer.

28. The system of claim 27, wherein the peripheral device is one of a personal digital assistant (PDA), a telephone, a digital camera, a modem, a keyboard, a mouse, a joystick, a CD-ROM drive, a tape drive, a floppy drive, a digital scanner, a printer, a data glove and a digitizer.

29. The system according to one of the claims 27 to 28, wherein the connector includes a cable having a universal serial bus (USB) compliant plug and port combination.

30. The system according to one of the claims 27 to 29, wherein the computer includes a hub driver that complies with the USB standard.

31. The system of claim 30, wherein the hub driver is a Windows™ based hub driver.

32. The system according to one of the claims 27 to 31, wherein the first signal module identifies the peripheral device to the computer as a zero-port hub.

33. The system according to one of the claims 27 to 31, wherein the first signal modules identifies the peripheral device to the computer as a one-port hub.

34. The system according to one of the claims 27 to 33, wherein the first and second signals are compliant with a universal serial bus (USB) standard.
